# EUROPEAN PATENT SPECIFICATION

(11) **EP 4 285 125 B1**
(45) Date of publication and mention of the grant of the patent: **15.10.2025**
(21) Application number: 22746540.8
(22) Date of filing: 26.01.2022
(51) Int. Cl.: G01N 35/04, C12M 1/34, G01N 35/00, G01N 35/02, G01N 35/10, G01N 15/05

(54) **ANALYZER WITH AUTO-LOADER**
ANALYSEGERÄT MIT AUTOMATISCHER LADEVORRICHTUNG
ANALYSEUR AVEC CHARGEUR AUTOMATIQUE

(30) Priority: 27.01.2021 US 202163142174 P
(43) Date of publication of application: 06.12.2023
(73) Proprietor: Alcor Scientific LLC, Smithfield, RI 02917 (US)
(72) Inventor: SACCHETTI, Peter, J., Falmouth, MA 02556 (US); FRAPPA, Francesco, A., 33030 Udine (IT); RUGGERI, Carlo, Lincoln, RI 02864 (US)
(74) Representative: Wilson Gunn
(86) International application number: PCT/US2022/013931
(87) International publication number: WO 2022/164922

(56) References cited:
- WO-A1-2013/052318
- US-A1- 2005 123 445
- US-A1- 2006 136 095
- US-A1- 2007 243 600
- US-A1- 2011 067 781
- US-A1- 2014 154 733
- US-A1- 2014 305 227

## Description

### STATEMENT REGARDING GOVERNMENT INTEREST

None.

### CROSS REFERENCE TO RELATED APPLICATIONS

This application claims benefit from U.S. Provisional Patent Application Serial No. 63/142,174, filed January 27, 2021.

### BACKGROUND OF THE INVENTION

The invention generally relates to a medical analyzer, and in particular to an analyzer with autoloader.

Medical analyzers are used to measure various functions of a patient. For example, an erythrocyte sedimentation rate (ESR) analyzer measures an ESR or sed rate, which is a clinical lab test that measures the rate at which red blood cells in whole blood descend into a standardized tube, reported as mm per hour. This test is used to measure inflammation because red blood cells of patients with inflammation settle quicker than in normal patients. Thus, a high ESR can be indicative of elevated inflammation, though other conditions such as anemia, renal failure, and obesity can increase ESR rate as well.

WO 2013/052318 A1 discloses a device for performing assays that are performed using a centrifuge, such as erythrocyte sedimentation rate.

### SUMMARY OF THE INVENTION

The following presents a simplified summary of the innovation in order to provide a basic understanding of some aspects of the invention. This summary is not an extensive overview of the invention. It is intended to neither identify key or critical elements of the invention nor delineate the scope of the invention. Its sole purpose is to present some concepts of the invention in a simplified form as a prelude to the more detailed description that is presented later. The scope of the invention is presented in independent claims 1 and 6.

In an aspect, the invention features an analyzer including an analytical unit, the analytical unit including at least a mixing wheel, a piercing system, a reading cell and a hydraulic system, a rack holding system holding homogeneous racks, each of the homogeneous racks including sample tubes, a robotic arm to pick up any one of homogeneous racks and load sample tubes from it into the mixing wheel, and a system handler processor, the analytical unit, the rack holding system and the robotic arm communicatively linked by the system handler processor.

In another aspect, the invention features a method including providing an analyzer, the analyzer including an analytical unit, the analytical unit including at least a mixing wheel, a piercing system, a reading cell and a hydraulic system, a rack holding system holding homogeneous racks, each of the homogeneous racks including sample tubes, a robotic arm to pick up any one of the homogeneous racks and load sample tubes from it into the mixing wheel, and a system handler processor, the analytical unit, the rack holding system and the robotic arm communicatively linked by the system handler processor, selecting a rack of sample tubes; picking up each one of the sample tubes in the selected rack with a robotic arm and placing the picked sample tube into a mixing wheel, performing an analysis on the picked sample tube, and returning the picked sample tube to the selected rack.

These and other features and advantages will be apparent from a reading of the following detailed description and a review of the associated drawings. It is to be understood that both the foregoing general description and the following detailed description are explanatory only and are not restrictive of aspects as claimed.

### BRIEF DESCRIPTION OF THE DRAWINGS

These and other features, aspects, and advantages of the present invention will become better understood with reference to the following description, appended claims, and accompanying drawings where:
FIG. 1 is a block diagram.
FIG. 2 is an illustration of an exemplary system.
FIG. 3 is an illustration of an exemplary fully loaded system.
FIG. 4 is an illustration of an exemplary analytical unit.
FIG. 5 is an illustration of an exemplary rack holding system.
FIG. 6 is an illustration of an exemplary robotic arm.
FIG. 7 is another illustration of an exemplary robotic arm.
FIG. 8 is an illustration of an exemplary loading rack.
FIG. 9 is an illustration of an exemplary piercing system reading cell.
FIG. 10 is an illustration of an exemplary mixing wheel.
FIG. 11 is an illustration of an exemplary arm tube mixing wheel interaction.

### DETAILED DESCRIPTION

The subject innovation is now described with reference to the drawings, wherein like reference numerals are used to refer to like elements throughout. In the following description, for purposes of explanation, numerous specific details are set forth in order to provide a thorough understanding of the present invention. It may be evident, however, that the present invention may be practiced without these specific details. In other instances, well-known structures and devices are shown in block diagram form in order to facilitate describing the present invention.

The present invention will now be described with reference to ESR testing. However, techniques described herein are not limited to ESR testing and may be adapted to a variety of test systems.

Erythrocyte sedimentation rate (ESR) testing is typically performed using analyzers. These analyzers speed run time, while enhancing safety and accuracy. One standard technique for ESR testing is called the Westergren Method in which whole blood is mixed with sodium citrate or ethylenediaminetetraacetic acid (EDTA) as an anticoagulant and then added to a standardized calibrated tube, which is allowed to sit for one hour. Sedimentation rate is measured by recording the number of millimeters between the top of the sedimented red blood cells and the zero mark of the tube. Many analyzers operate using the Westergren Method, though instruments employing alternative methods have begun to emerge. Features important in an ESR analyzer include, for example, its capacity, run time, throughput, dimensions, sample tracking features and so forth. Commercially available ESR analyzers include, for example, the iSED^{®} ESR Analyzer and the miniiSED^{®} ESR Analyzer, both from Alcor Scientific Inc.

It should be noted that the system and method described herein does not measure according to the Westergren method. Instead, system and method described herein measures aggregation optically and then converts the obtained data to an equivalent Westergren result expressed in mm/h.

There is a portion of the ESR analyzer market that uses racks as media to transport sample tubes. The system of the present invention is capable of loading a number of tubes contained into racks already in use on analyzers rather than loading tubes one by one into a mixing wheel.

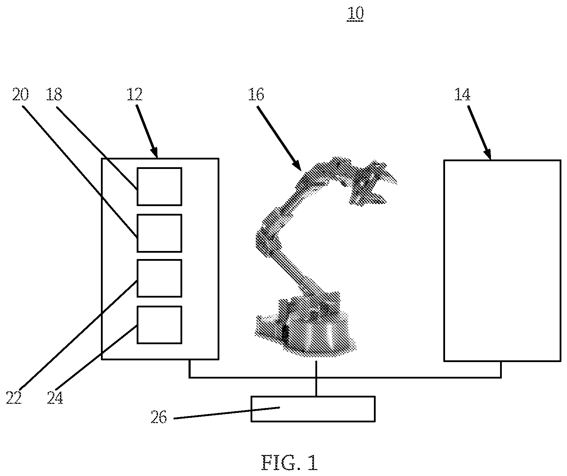

As shown in FIG. 1, an exemplary ESR analyzer 10 includes an analytical unit 12, a rack holding system 14 and a robotic arm 16. The rack holding system 14 can hold any number of homogeneous racks. For example, the rack holding system 14 may contain one rack of ten samples tubes, each of which may be pierced. The robotic arm 16 picks up a sample tube from any rack position in the rack and loads it into a mixing wheel 18 of the analytical unit 12. After insertion, each rack is locked in position until all its tubes have been processed. After completion, the rack is released for manual extraction. A rack is considered completely processed when all its contained tubes are evaluated for measurement and repositioned on its original pickup location.

Potentially, not all the tubes inside the rack require ESR analysis. Therefore, the ESR Analyzer 10 extracts a tube from its rack location, identifies the extracted tube using, for example, barcode label detection, executes a request to a Laboratory Integration System (LIS) and, in case ESR analysis is not required, immediately repositions the tube on its original position. If ESR analysis is required, the sample tube is placed on the mixing wheel, where the measurement process starts. This step is executed for all samples inserted into the ESR Analyzer 10 with coordination with the mixing wheel. After a tube is measured successfully by the analytical unit 12, which includes the mixing wheel 18, a piercing system 20, a reading cell 22 and a hydraulic system 24, the mixing wheel 18 positions the tube ready for extraction on a loading/downloading position, to enable the robotic arm 16 to extract it and position it back on its position of origin inside the rack in the rack holding system 14.

The ESR analyzer 10 also includes system handler processor 26. The analytical unit 12, the rack holding system 14 and the robotic arm 16 are all in communication to each other via the system handler processor 26.

The rack holding system 14 is interchangeable based on rack type, such Sysmex^{®}, Beckman Coulter^{®}, and so forth. The rack holding system 14 may include one or more of the following features. The rack holding system 14 may be able to receive more than one rack, lock the rack in place via, for example, a solenoid latch, notify a user via visual indication of a rack status, notify the system which rack is meant to receive to adjust pick and place coordinates, and able to release the rack when completed.

The robotic arm 16 is able to reach every rack location, grip each sample tube inside the rack and extract sample tubes from the rack. The robotic arm 16 is able to detect a sample tube ID via, for example, barcode reader, able to position the extracted tube into the mixing wheel and able to re-position the measured tube from the mixing wheel to the original rack position.

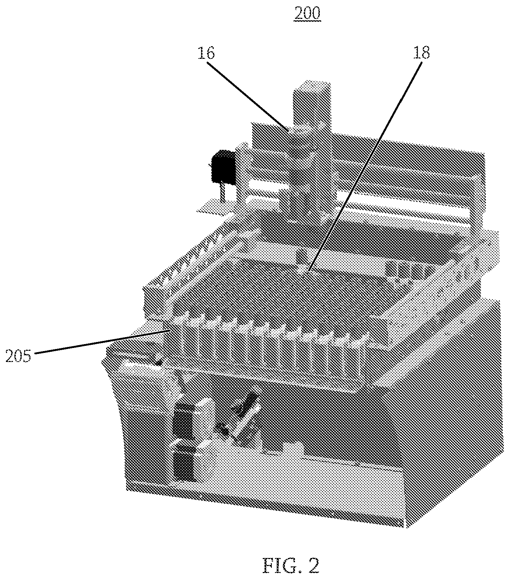

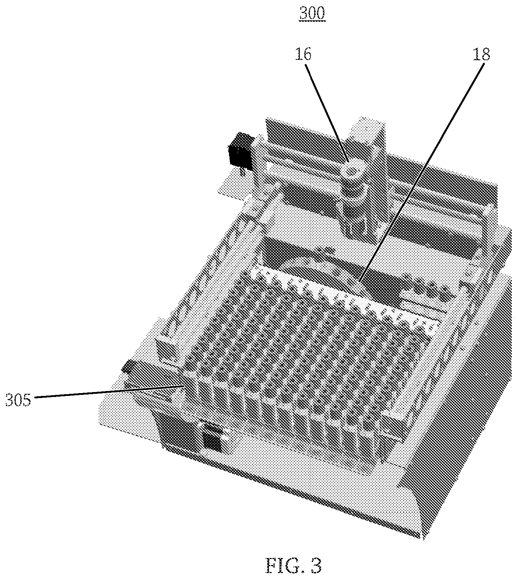

In FIGs. 2 and 3, exemplary systems 200, 300, respectively, are illustrated. In each case, racks 205, 305, respectively, are fully loaded.

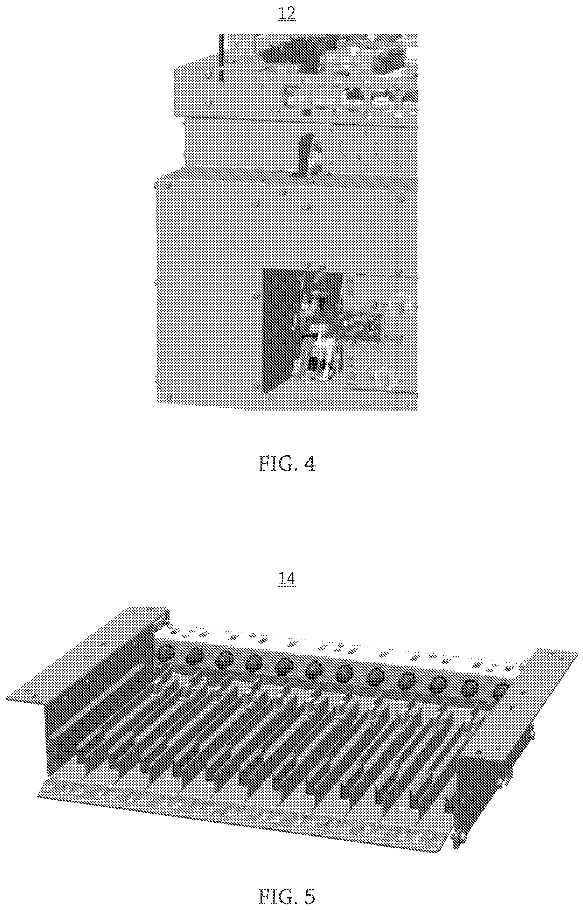

In FIG. 4, the analytical unit 12 is illustrated. In one example, the analytical unit measures sedimentation rate Via evaluation of red blood cell aggregation by digitizing and recording the optical variation inside the reading cell over time and mathematically process and convert these optical values to a value comparable with Westergren method and expressed in millimeters per hour (mm/h).

In FIG. 5, the rack holding system 14 is illustrated. As described above, the rack holding system 14 can hold any number of homogeneous racks.

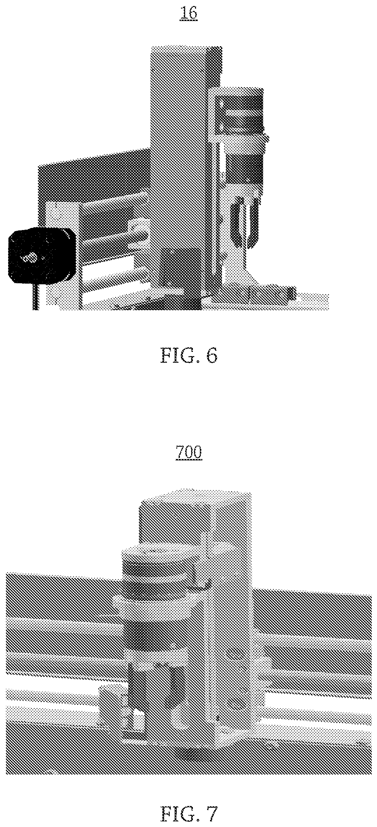

In FIG. 6, the robotic arm 16 is illustrated. As described above, The robotic arm 16 picks up a sample tube from any rack position in the rack and loads it into the mixing wheel 18 of the analytical unit 12.

In FIG. 7, is another exemplary robotic arm 700 is illustrated.

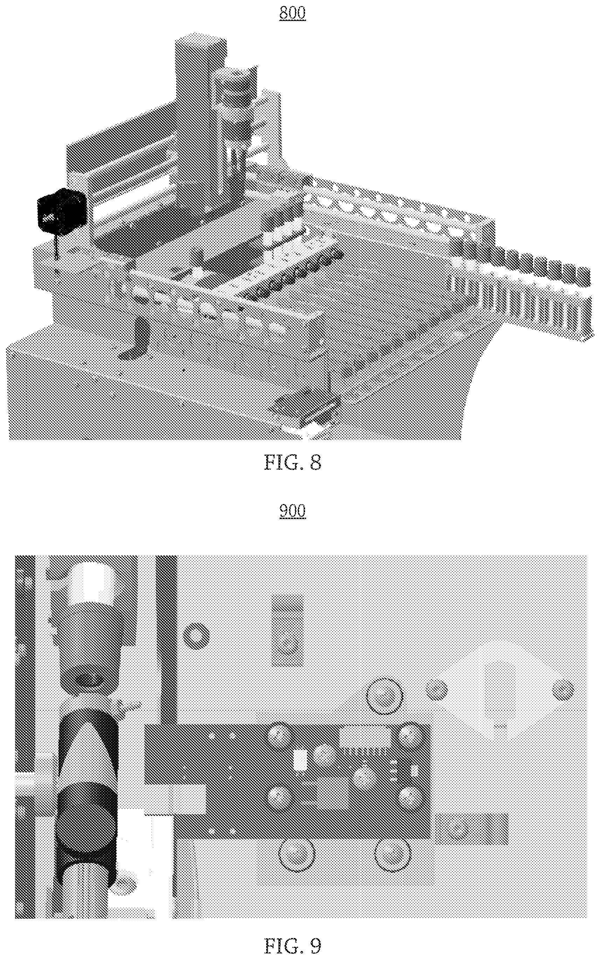

In FIG. 8, an exemplary loading rack 800 is illustrated.

In FIG. 9, an exemplary piercing system reading cell 900 is illustrated.

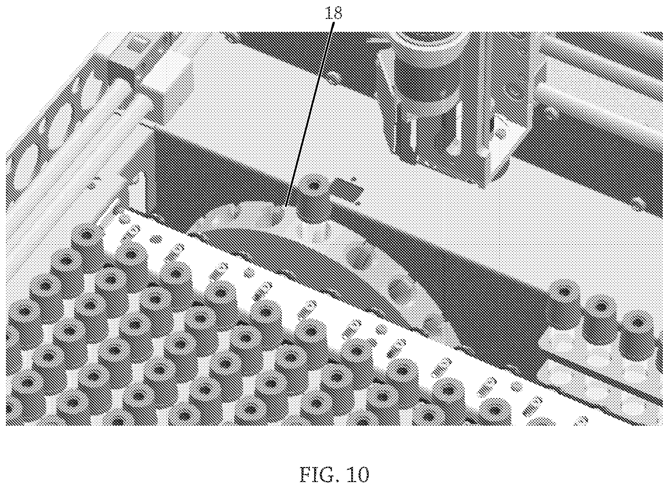

In FIG. 10 the mixing wheel 18 is illustrated.

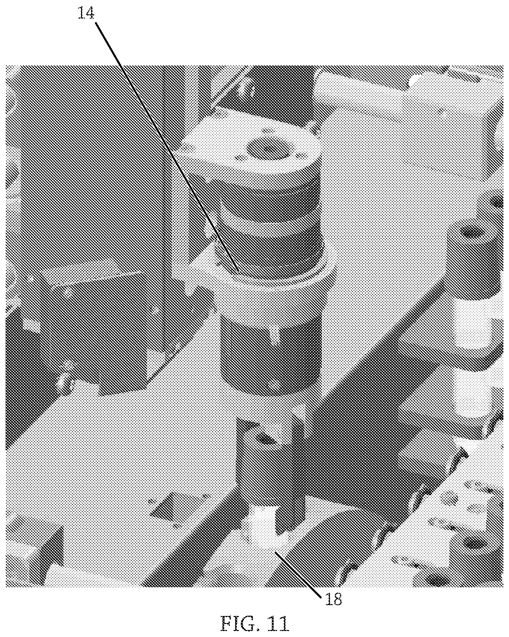

In FIG. 11, an exemplary arm 14 / tube mixing wheel 18 interaction is illustrated.

It would be appreciated by those skilled in the art that various changes and modifications can be made to the illustrated embodiments without departing from the scope of the appended claims.

## Claims

1. An analyzer (10) comprising:
an analytical unit (12), the analytical unit (12) including at least a mixing wheel (18), a piercing system (20), a reading cell (22) and a hydraulic system (24);
a rack holding system (14) holding at least one homogenous rack containing tubes and configured to lock the at least one homogenous rack in a locked position;
a robotic arm (16) configured to pick up any one of the at least one homogeneous rack and load tubes from it into the mixing wheel (18);
a system handler processor (26) configured for communicatively linking the analytical unit (12), the rack holding system (14), and the robotic arm (16) and further configured to cause the robotic arm to
extract the tubes from the at least one homogenous rack in the locked position, identify the extracted tubes, after which the analyzer (10) executes a request to a Laboratory Integration System, LIS, and, if no analysis is required, the system handler processor (26) is configured to cause the robotic arm (16) to return them back to their original positions;
wherein, if analysis is required, the system handler processor (26) causes the robotic arm (16) to place each extracted tube of the extracted tubes on the mixing wheel (18), where the analytical unit (12) obtains/computes a sedimentation rate via evaluation of red blood cell aggregation by digitally recording optical changes in the reading cell (22) over time, mathematically processes this data into a value comparable with the Westergren method and expressed in millimeters per hour ,mm/h, and, upon successful measurement, then the system handler processor causes the mixing wheel (18) to move the analyzed tubes to a position for extraction, and then causes the robotic arm (16) to retrieve and return them to their original positions in the rack holding system (14); and
wherein the system handler processor (26) is configured to lock the at least one homogeneous rack in a locked position until all its tubes have been processed.

2. The analyzer (10) of claim 1, wherein the robotic arm (16) of the analytical unit (12) further includes a reader configured to read a code or identification located on each extracted tube of the tubes to identify the extracted tube from the at least one homogenous rack.

3. The analyzer (10) of claim 2, wherein the robotic arm (16) is configured to access locations of the tubes in each rack of the multiple racks of the at least one homogenous rack within the rack holding system (14), extract each tube from any location in each rack of the multiple racks while the multiple racks are in their locked positions.

4. The analyzer (10) of claim 2, wherein the code is a bar code located on each extracted tube and the reader is a barcode reader.

5. The analyzer (10) of any one of the preceding claims, wherein the Laboratory Integration System is configured to provide information on whether a particular tube of the tubes requires analysis, such that the tubes are sample tubes.

6. A method for analyzing samples using the analyzer (10) of any one of claims 1-5, the method comprising:
receiving the at least one homogenous rack containing tubes, and locking the at least one homogenous rack in a locked position in the rack holding system (14);
extracting one or more tubes of the tubes from the at least one homogenous rack locked in the rack holding system (14), the robotic arm (16) providing;
identifying each extracted tube of the one or more tubes while extracting the one or more tubes;
sending the identification to a Laboratory Integration System, LIS;
returning each extracted tube back to their original position in the at least one homogenous rack, if no analysis is required, to optimize the analyzer (10) processing time; and
placing each extracted tube onto a mixing wheel (18), if analysis is required;
using the analytical unit (12) for analysis by obtaining/computing a sedimentation rate by:
digitizing and recording optical variations within the reading cell (22) over time;
mathematically processing these optical variations to obtain a sedimentation rate value expressed in millimeters per hour, mm/h, comparable with the Westergren method and via evaluation of red blood cell aggregation and, upon successful measurement, then the mixing wheel (18) moves the analyzed tubes to a position for extraction;
retrieving the analyzed tubes and returning them back to their original positions in the at least one homogenous rack of the rack holding system (14); and
using the system handler processor (26) for communicatively linking the analytical unit (12), the rack holding system (14), and the robotic arm (16) through the system handler processor (26).

7. The method of claim 6 wherein the identifying of the extracted tube with the robotic arm (16) includes:
reading an identification located on the extracted tube, and wherein a request is executed by the system handler processor (26);
sending the identification of the extracted tube to a Laboratory Integration System.

8. The method of claim 7, wherein the Laboratory Integration System is configured to provide information on whether an analysis is to be performed on the extracted tube.

9. The method of claim 7, wherein the identification is a barcode.

10. The method of claim 7, wherein reading the identification is performed by the robotic arm (16).

## Patentansprüche

1. Analysator (10), der Folgendes umfasst:
eine Analyseeinheit (12), wobei die Analyseeinheit (12) mindestens ein Mischrad (18), ein Durchstechsystem (20), eine Lesezelle (22) und ein Hydrauliksystem (24) umfasst;
ein Gestellhaltesystem (14), das mindestens ein homogenes Gestell, das Röhrchen enthält, hält und so konfiguriert ist, das mindestens eine homogene Gestell in einer verriegelten Position zu verriegeln;
einen Roboterarm (16), der so konfiguriert ist, dass er ein beliebiges des mindestens einen homogenen Gestells aufnimmt und Röhrchen davon in das Mischrad (18) lädt;
einen Systemhandhabungsprozessor (26), der für die kommunikative Verknüpfung der Analyseeinheit (12), des Gestellhaltesystems (14) und des Roboterarms (16) konfiguriert ist und zusätzlich so konfiguriert ist, dass er den Roboterarm veranlasst,
Röhrchen aus dem mindestens einen homogenen Gestell in der verriegelten Position herauszuziehen, die herausgezogenen Röhrchen zu identifizieren, wonach der Analysator (10) eine Anforderung an ein Laborintegrationssystem, LIS, ausführt und, wenn keine Analyse erforderlich ist, der Systemhandhabungsprozessor (26) so konfiguriert ist, dass er den Roboterarm (16) veranlasst, sie wieder in ihre ursprünglichen Positionen zurückzuführen;
wobei, wenn eine Analyse erforderlich ist, der Systemhandhabungsprozessor (26) veranlasst, dass der Roboterarm (16) jedes entnommene Röhrchen der entnommenen Röhrchen auf dem Mischrad (18) platziert, wo die Analyseeinheit (12) eine Sedimentationsrate über Auswertung der Aggregation roter Blutkörperchen durch digitales Aufzeichnen optischer Änderungen in der Lesezelle (22) über die Zeit erhält/errechnet, diese Daten mathematisch zu einem Wert verarbeitet, der mit dem Westergren-Verfahren vergleichbar ist und in Millimeter pro Stunde, mm/h, ausgedrückt wird, und wobei bei erfolgreicher Messung der Systemhandhabungsprozessor dann veranlasst, dass das Mischrad (18) die analysierten Röhrchen in eine Position zur Entnahme bewegt, und dann den Roboterarm (16) veranlasst, diese aufzufinden und in ihre ursprünglichen Positionen im Gestellhaltesystem (14) zurückzuführen; und
wobei der Systemhandhabungsprozessor (26) so konfiguriert ist, dass er das mindestens eine homogene Gestell in einer verriegelten Position verriegelt, bis alle seine Röhrchen verarbeitet wurden.

2. Analysator (10) nach Anspruch 1, wobei der Roboterarm (16) der Analyseeinheit (12) ferner ein Lesegerät aufweist, das so konfiguriert ist, dass es einen Code oder eine Kennung liest, der bzw. die sich auf jedem entnommenen Röhrchen der Röhrchen befindet, um das entnommene Röhrchen aus dem mindestens einen homogenen Gestell zu identifizieren.

3. Analysator (10) nach Anspruch 2, wobei der Roboterarm (16) so konfiguriert ist, dass er auf Stellen der Röhrchen in jedem Gestell der mehreren Gestelle des mindestens einen homogenen Gestells innerhalb des Gestellhaltesystems (14) zugreift und jedes Röhrchen aus jeder Stelle in jedem Gestell der mehreren Gestelle herauszieht, während sich die mehreren Gestelle in ihren verriegelten Positionen befinden.

4. Analysator (10) nach Anspruch 2, wobei der Code ein Strichcode ist, der sich auf jedem herausgezogenen Röhrchen befindet, und der Leser ein Strichcodeleser ist.

5. Analysator (10) nach einem der vorhergehenden Ansprüche, wobei das Laborintegrationssystem so konfiguriert ist, dass es Informationen darüber liefert, ob ein bestimmtes Röhrchen der Röhrchen eine Analyse erfordert, sodass die Röhrchen Probenröhrchen sind.

6. Verfahren zum Analysieren von Proben unter Verwendung des Analysators (10) nach einem der Ansprüche 1 bis 5, wobei das Verfahren Folgendes umfasst:
Aufnehmen des mindestens einen homogenen Gestells, das Röhrchen enthält, und Verriegeln des mindestens einen homogenen Gestells in einer verriegelten Position in dem Gestellhaltesystem (14);
Herausziehen eines oder mehrerer Röhrchen der Röhrchen aus dem mindestens einen homogenen Gestell, das in dem Gestellhaltesystem (14) verriegelt ist, durch den Roboterarm (16);
Identifizieren jedes entnommenen Röhrchens des einen oder der mehreren Röhrchen, während das eine oder die mehreren Röhrchen entnommen werden;
Senden der Kennung an ein Laborintegrationssystem, LIS;
Zurückführen jedes entnommenen Röhrchens in seine ursprüngliche Position in dem mindestens einen homogenen Gestell, wenn keine Analyse erforderlich ist, um die Verarbeitungszeit des Analysators (10) zu optimieren; und
Anordnen jedes entnommenen Röhrchens auf einem Mischrad (18), wenn eine Analyse erforderlich ist;
Verwenden der Analyseeinheit (12) zur Analyse durch Erhalten/Berechnen einer Sedimentationsrate durch:
Digitalisieren und Aufzeichnen optischer Variationen innerhalb der Lesezelle (22) über die Zeit;
mathematische Verarbeitung dieser optischen Variationen, um einen Sedimentationsratenwert, ausgedrückt in Millimeter pro Stunde, mm/h, vergleichbar mit dem Westergren-Verfahren und durch Auswertung der Aggregation roter Blutkörperchen, zu erhalten, und dann, bei erfolgreicher Messung, bewegt das Mischrad (18) die analysierten Röhrchen zu einer Position für die Entnahme;
Auffinden und Entnehmen der analysierten Röhrchen und Zurückführen derselben in ihre ursprünglichen Positionen in dem mindestens einen homogenen Gestell des Gestellhaltesystems (14); und
Verwenden des Systemhandhabungsprozessors (26) zur kommunikativen Verbindung der Analyseeinheit (12), dem Gestellhaltesystem (14) und dem Roboterarm (16) durch den Systemhandhabungsprozessor (26).

7. Verfahren nach Anspruch 6, wobei das Identifizieren des entnommenen Röhrchens mit dem Roboterarm (16) Folgendes umfasst:
Lesen einer Kennung, die sich auf dem extrahierten Röhrchen befindet, und wobei eine Anforderung durch den Systemhandhabungsprozessor (26) ausgeführt wird;
Senden der Kennung des entnommenen Röhrchens an ein Laborintegrationssystem.

8. Verfahren nach Anspruch 7, wobei das Laborintegrationssystem so konfiguriert ist, dass es Informationen darüber bereitstellt, ob eine Analyse an dem entnommenen Rohr durchgeführt werden soll.

9. Verfahren nach Anspruch 7, wobei die Kennung ein Strichcode ist.

10. Verfahren nach Anspruch 7, wobei das Lesen der Kennung durch den Roboterarm (16) durchgeführt wird.

## Revendications

1. Analyseur (10) comprenant :
un module d'analyse (12), le module d'analyse (12) comprenant l'au moins une roue de mélange (18), un système de perçage (20), une cellule de lecture (22) et un système hydraulique (24) ;
un système de maintien de portoirs (14) maintenant l'au moins un portoir homogène contenant des tubes et configuré pour verrouiller l'au moins un portoir homogène dans une position verrouillée ;
un bras robotique (16) configuré pour prélever l'un quelconque de l'au moins un portoir homogène et charger des tubes provenant de celui-ci dans la roue de mélange (18) ;
un processeur de gestion de système (26) configuré pour relier en communication le module d'analyse (12), le système de maintien de portoirs (14) et le bras robotique (16) et en outre configuré pour amener le bras robotique à
extraire les tubes de l'au moins un portoir homogène dans la position verrouillée, identifier les tubes extraits, après quoi l'analyseur (10) exécute une demande à un système d'intégration de laboratoire, LIS, et, si aucune analyse n'est requise, le processeur de gestion de système (26) est configuré pour amener le bras robotique (16) à les renvoyer à leurs positions d'origine ;
dans lequel, si une analyse est requise, le processeur de gestion de système (26) amène le bras robotique (16) à placer chaque tube extrait parmi les tubes extraits sur la roue de mélange (18), où le module d'analyse (12) obtient/calcule une vitesse de sédimentation par l'évaluation de l'agrégation des globules rouges en enregistrant numériquement les changements optiques dans la cellule de lecture (22) dans le temps, traite mathématiquement ces données en une valeur comparable à la méthode de Westergren et exprimée en millimètres par heure, mm/h, et, en cas de mesure réussie, alors le processeur gestion de système amène
la roue de mélange (18) à déplacer les tubes analysés vers une position pour l'extraction, puis amène le bras robotique (16) à les récupérer et à les renvoyer vers leurs positions d'origine dans le système de maintien de portoirs (14) ; et
dans lequel le processeur de gestion de système (26) est configuré pour verrouiller l'au moins un portoir homogène dans une position verrouillée jusqu'à ce que tous ses tubes aient été traités.

2. Analyseur (10) selon la revendication 1, dans lequel le bras robotique (16) du module d'analyse (12) comprend en outre un lecteur configuré pour lire un code ou une identification situés sur chaque tube extrait parmi les tubes pour identifier le tube extrait provenant de l'au moins un portoir homogène.

3. Analyseur (10) selon la revendication 2, dans lequel le bras robotique (16) est configuré pour accéder à des emplacements des tubes dans chaque portoir parmi les multiples portoirs de l'au moins un portoir homogène au sein du système de maintien de portoirs (14), extraire chaque tube d'un quelconque emplacement dans chaque portoir parmi les multiples portoirs tandis que les multiples portoirs sont dans leurs positions verrouillées.

4. Analyseur (10) selon la revendication 2, dans lequel le code est un code à barres situé sur chaque tube extrait et le lecteur est un lecteur de code à barres.

5. Analyseur (10) selon l'une quelconque des revendications précédentes, dans lequel le système d'intégration de laboratoire est configuré pour fournir des informations indiquant si un tube particulier parmi les tubes requiert une analyse, de telle sorte que les tubes sont des tubes d'échantillon.

6. Procédé pour analyser des échantillons à l'ade de l'analyseur (10) selon l'une quelconque des revendications 1 à 5, le procédé comprenant :
la réception de l'au moins un portoir homogène contenant des tubes, et le verrouillage de l'au moins un portoir homogène dans une position verrouillée dans le système de maintien de portoirs (14) ;
l'extraction d'un ou plusieurs tubes parmi les tubes de l'au moins un portoir homogène verrouillé dans le système de maintien de portoirs (14), le bras robotique (16) fournissant ;
l'identification de chaque tube extrait parmi les un ou plusieurs tubes tout en extrayant les un ou plusieurs tubes ;
l'envoi de l'identification à un Système d'intégration de laboratoire, LIS ;
le renvoi de chaque tube extrait de retour à sa position d'origine dans l'au moins un portoir homogène, si aucune analyse n'est requise, pour optimiser le temps de traitement de l'analyseur (10) ; et
le placement de chaque tube extrait sur une roue de mélange (18), si une analyse est requise ;
l'utilisation du module d'analyse (12) pour une analyse par obtention/calcule d'une vitesse de sédimentation par :
la numérisation et l'enregistrement de variations optiques au sein de la cellule de lecture (22) dans le temps ;
le traitement mathématique de ces variations optiques pour obtenir une valeur de vitesse de sédimentation exprimée en millimètres par heure, mm/h, comparable à la méthode de Westergren et par l'évaluation de l'agrégation des globules rouges et, en cas de mesure réussie, alors la roue de mélange (18) déplace les tubes analysés vers une position d'extraction ;
la récupération des tubes analysés et leur renvoi en retour à leurs positions d'origine dans l'au moins un portoir homogène du système de maintien de portoirs (14) ; et
l'utilisation du processeur de gestion de système (26) pour relier en communication le module d'analyse (12), le système de maintien de portoirs (14) et le bras robotique (16) par l'intermédiaire du processeur de gestion de système (26).

7. Procédé selon la revendication 6, dans lequel l'identification du tube extrait avec le bras robotique (16) comprend :
la lecture d'une identification située sur le tube extrait, et dans lequel une demande est exécutée par le processeur de gestion de système (26) ;
l'envoi de l'identification du tube extrait à un Système d'intégration de laboratoire.

8. Procédé selon la revendication 7, dans lequel le système d'intégration de laboratoire est configuré pour fournir des informations indiquant si une analyse doit être réalisée sur le tube extrait.

9. Procédé selon la revendication 7, dans lequel l'identification est un code à barres.

10. Procédé selon la revendication 7 dans lequel la lecture d'une identification est exécutée par le bras robotique (16).
